(19) Europäisches Patentamt
European Patent Office
Office européen des brevets

(11) **EP 4 273 640 A1**

(12) **EUROPEAN PATENT APPLICATION**

(43) Date of publication:
**08.11.2023 Bulletin 2023/45**

(21) Application number: **23170552.6**

(22) Date of filing: **28.04.2023**

(51) International Patent Classification (IPC):
**G05B 19/402** $^{(2006.01)}$    **B23Q 1/03** $^{(2006.01)}$
**B23Q 3/06** $^{(2006.01)}$

(52) Cooperative Patent Classification (CPC):
**G05B 19/402;** G05B 2219/45174;
G05B 2219/49129; G05B 2219/49136;
G05B 2219/50125; G05B 2219/50127

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.05.2022 IT 202200009188**

(71) Applicant: **SCM Group S.p.A.**
**47921 Rimini (RN) (IT)**

(72) Inventors:
• **BERTUCCIOLI, Alessandro**
**47921 RIMINI (RN) (IT)**
• **SPAZZOLI, Andrea**
**47921 RIMINI (RN) (IT)**

(74) Representative: **Tiburzi, Andrea et al**
**Barzanò & Zanardo Roma S.p.A.**
**Via Piemonte 26**
**00187 Roma (IT)**

(54) **METHOD OF POSITIONING COUPLING DEVICES AND MACHINING CENTER IMPLEMENTING SUCH METHOD**

(57) The present invention relates to a method of positioning (300) coupling devices ($S_{ij}$) on a bar (11) of a bar plane (2) of a work center.

The present invention also relates to a work center for machining pieces or panels made of wood, plastic, fiberglass, and the like.

Fig. 1

EP 4 273 640 A1

## Description

The present invention relates to a method for positioning coupling devices and a work center that implements this method.

## Field of invention

More specifically, the invention relates to a method for positioning coupling devices for panels, such as panels made of wood, plastic, fiberglass, and the like, on a bar plane, of the type typically used in work centers, designed and manufactured in particular to allow a faster reconfiguration of the arrangement of the coupling devices between one machining and another.

In the following, the description will be directed to the configuration of bar planes for work centers for wooden panels, but it is clear that the same should not be considered limited to this specific use.

## Prior art

As is well known, there are currently work centers for machining panels. The machining carried out using these work centers include, as an example, the cutting, milling, or drilling of panels. To carry out these machining, arranging the panels on a work plane and block them in position is generally necessary.

To make a work center easily adaptable to the various machining requirements, the work planes are generally constituted by a plurality of bars, movable in one direction, generally the advancement direction of the piece to be machined. In this way, the bars can be moved closer or further apart as needed.

Furthermore, the bar plane comprises a plurality of coupling devices, such as suction cups or clamps, slidingly movable along said bars, so that they can be moved towards or away from each other, to create different configurations for blocking panels even of different sizes.

The bars are provided with canalizations for supplying the vacuum, necessary to block the pieces on the suction cups.

In general, up to six suction cups or clamps can be mounted on each bar of a bar plane, which can be removed and then freely repositioned, as mentioned, on the basis of the machining to be performed on the piece to be machined, according to different arrangements.

Both the bars and the suction cups can be positioned manually along the base of the work center. In this case, it is necessary for an operator to exactly position the bars and the suction cups on the bars to carry out the required machining.

Generally, between one machining operation and another, both the bars and the coupling devices need to be moved. In particular, the operation of repositioning the coupling devices requires a lot of time and many moving, removing, and adding operations of coupling devices on the same bar.

Therefore, the need is felt in the sector to minimize the number of operations during this repositioning step, both in case the same step is carried out manually and automatically by means of suitable moving means.

It is clear that this procedure is onerous in terms of time and, therefore, economy.

## Scope of the invention

In light of the above, it is, therefore, a scope of the present invention to propose a method that allows, for each bar, to pass from one configuration of gripping devices to another with the minimum number of steps or movements, allowing an operator or an automatic system for moving said coupling devices to speed up the repositioning operations.

Another scope of the invention is to provide a positioning system based on the indicated positioning method.

A further object of the present invention is to implement this method in a work center for machining panels, in particular wooden panels.

## Object of the invention

It is, therefore, object of the present invention a method of positioning coupling devices on a bar of a bar plane of a work center, comprising, for each bar, the following steps: acquiring an initial or reference arrangement of the coupling devices, characterizing each coupling device with a type index, a position index along the bar; acquiring a final or target arrangement of the coupling devices, characterizing each coupling device according to a type index, a position index along the bar; following a sequential order according to the index or the position variable of the coupling devices of the reference arrangement, matching, by means of an iterative procedure, to each coupling device of the reference arrangement, a respective coupling device of the final arrangement, wherein said coupling occurs if the coupling device of the reference arrangement and the coupling device of the final arrangement are of the same type, and generating commands or indications to pass, for each bar, from said reference arrangement of the coupling devices to said target arrangement of the coupling devices based on the associations of the previous matching step.

Always according to the invention, said matching step may take place between a coupling device of the reference arrangement and a coupling device of the final arrangement having a minimum absolute distance between them, wherein said absolute distance between the coupling device of the reference arrangement and the coupling device of the final arrangement is determined with respect to the respective spatial position along the bar.

Still according to the invention, the position along the bar of each coupling device may be measured with respect to a reference axis, wherein said reference axis is arranged parallel to said bars, and wherein said absolute distance between a coupling device of the reference arrangement and a coupling device of the final arrangement is calculated as the difference between the respective measured positions with respect to said reference.

Advantageously according to the invention, said method may comprise, after said matching step, the following further steps: obtaining a plurality of matching iterations, for each coupling device of the reference arrangement, wherein each matching iteration comprises one or more matches; determining the matching iteration having multiple matches; and associating to each coupling device of the target arrangement, the respective coupling device of the reference arrangement, according to the combinations of the matching iteration having several combinations, adding the empty positions in case there is no match.

Further according to the invention, said step of generating commands or indications may comprise the following sub-steps: for each coupling device of the target arrangement coupled with a coupling device of the reference arrangement, generating a displacement command; for each coupling device of the target arrangement not coupled with a coupling device of the reference arrangement, generating a command to add said coupling device of the target arrangement on the bar; and for each coupling device of the reference arrangement not matched with a coupling device of the target arrangement, generating a command to remove said coupling device of the reference arrangement from the bar.

Always according to the invention, said command generating step may comprise the sub-step of generating a command for the rotation of the coupling devices of the target arrangement.

Still according to the invention, said method may comprise the further step of displaying the commands generated in said command generating step on a display device.

Advantageously according to the invention, said coupling devices may be suction cups or clamps.

A further object of the present invention is a work center for machining pieces or panels made of wood, plastic, fiberglass, and the like, comprising a bar plane consisting of a plurality of bars, wherein, on each bar, a plurality of coupling devices are movably slidingly arranged on each bar, for coupling a piece or panel to be machined, a display device, and a central control unit, operatively connected to said display device and to said bars for detecting the relative position of the coupling devices arranged on each bar, characterized in that said central control unit is configured to carry out the steps of the positioning method as defined above, and to generate the commands for the arrangement of the coupling device.

Always according to the invention, said coupling devices may be suction cups or clamps.

Still according to the invention, said bars of said bar plane may be movable.

Another object of the present invention is a computer program comprising instructions which, when the program is executed by a computer, cause the computer to execute the positioning method as defined above.

It is also an object of the present invention a computer readable storage medium comprising instructions which, when executed by a computer, cause the computer to execute the positioning method steps as defined above.

## Brief description of the figures

The present invention will be now described, for illustrative but not limitative purposes, according to its preferred embodiments, with particular reference to the figures of the enclosed drawings, wherein:

figure 1 shows the comparison between an arrangement of coupling devices in a reference position and in a target position;

figure 2A shows the table relating to the result of matching iterations;

figure 2B shows an ordered set of instructions generated to pass from a reference position to a target position;

figure 3 shows the modality of generating instructions for moving, excluding, or adding coupling devices on a display device with respect to a real bar plane;

figure 4 shows a series of images of a display device of a work center, which show some instructions for an operator for moving coupling devices arranged on bars; and

figure 5 shows a flowchart relating to a method of positioning coupling devices on the bars of a bar plane.

## Detailed description

In the various figures, similar parts will be indicated with the same reference numbers.

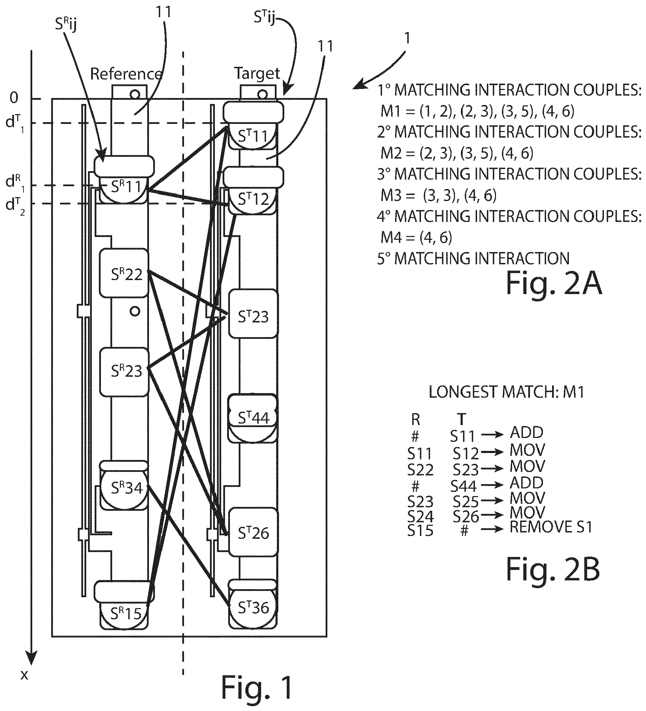

With reference to figure 1, a bar plane 1 that generally comprises a plurality of bars 11, can be observed. Figure 2 shows a bar 11 (on the left) with a positioning of the blocking devices $S_{ij}$ in a reference configuration, which can be considered the starting configuration, and the same bar 11 (on the right) with a positioning of the coupling devices $S_{ij}$ different, or desired or, as indicated below, "target".

The method of positioning, according to the invention, provides several steps for moving, adding, or removing coupling devices $S_{ij}$, in which the index i indicates the type of blocking device, while the index $j$ indicates the relative and absolute position between the coupling devices $S_{ij}$ of the same bar 11. Generally, this relative position index $j$ can go from 1 to N, so that the cou-

pling device $S_{i1}$ will be placed before, with respect to a reference, than the coupling device $S_{i2}$, which in turn will be placed before the coupling devices $S_{i3}$, and so on, realizing an ordered and sequential numbering.

Still with reference to figure 1, the absolute (and therefore not relative) position of the coupling devices is determined with respect to a reference system, which, in the present case, is shown in the figure as the X-axis, arranged parallel to the bar 11, with the origin coinciding with the top of the bar 11. The determination of the position of the abscissa of the i-th coupling device $S_{ij}$ is determined with known detection systems with which the bars 11 are equipped, such as optical encoders and the like.

The method of positioning, according to the invention, provides several matching iterations $M_k$ to determine combinations or "matching" between coupling devices $S_{ij}$ in the target arrangement (bar 11 on the right of figure 1) with respect to the reference arrangement (bar 11 on the left), to subsequently determine between which coupling devices $S_{ij}$ one, or more than one coupling devices $S_{ij}$ have to be added, or which and how many coupling devices $S_{ij}$ have to be removed.

For this purpose, in a first matching iteration $M_1$, starting from the first coupling device $S_{11}^R$ of the reference arrangement (indicated with the apex "R") and starting, conventionally, from the origin O of the X-axis, the abscissa or the position or the projection on the X-axis of said first coupling device $S_{11}^R$ of the reference arrangement, is compared with said first coupling device $S_{11}^T$ of the target arrangement, as well as the typology.

As can be seen in the case at issue, the outcome of the comparison by type of this test is positive. In fact, the first index has the same value (i.e., "1"), therefore the coupling devices are of the same type.

It is then determined whether said first coupling device $S_{11}^R$ of the reference arrangement is analogous to the second coupling device $S_{12}^T$ of the target arrangement. As it can be seen in the case at issue, the outcome is positive, for the same reason indicated above.

The same operation is carried out, iteratively, between the first coupling device $S_{11}^R$ and the third coupling device $S_{13}^T$. In that case, as it can be seen, the coupling devices $S_{11}^R$ and $S_{13}^T$ are not of the same type. For example, they can be a plane suction cup and a so-called angular suction cup.

The distance, always with respect to the X-axis, between the coupling device $S_{11}^R$ in the reference arrangement is then compared with the coupling devices of the same type $S_{11}^T$ $S_{12}^T$ of the target arrangement. Therefore, a first couple is created, determined on the basis of the minor absolute distance with respect to the X-axis, therefore ( $S_{11}^R, S_{12}^T$ ), or simply (1, 2), using the respective index $j$ to indicate the matching, thus conventionally indicating that the device in the first position in the bar 21 of the reference arrangement is combined or "coupled" with the one in the second position of the target arrangement. With reference to figure 1, it can be seen the position of the coupling device $S_{11}^R$ of the reference arrangement on the X-axis indicated with $d_1^R$ , and of the coupling devices of the same type $S_{11}^T$ $S_{12}^T$ of the target arrangement, indicated in the figure with $d_1^T$ and $d_2^T$ . The distances $D_{11} = |d_1^R - d_1^T|$ and $D_{12} = |d_1^R - d_2^T|$ are calculated, and it is associated with the coupling device SR of the reference arrangement between the coupling devices of the same type $S_{11}^T$ $S_{12}^T$ in the target arrangement that form the minimum distance.

It is then proceed with the comparison between the second coupling device $S_{22}^R$ of the reference arrangement, which, as it can be seen, is of "2" type, and the third coupling device $S_{23}^T$ of the target arrangement, which, as it can be seen, are of the same type and, therefore, can be coupled. It is added to the first matching iteration $M_1$ the second couple (2, 3), because the next device in the target position is of a different type.

It is proceed with the third coupling device $S_{23}^R$ of the reference arrangement, which, as it can be seen, is still of "2" type. The coupling device $S_{23}^R$ is compared to the coupling device $S_{44}^T$ of the target arrangement still not coupled, following the last coupled, which is the coupling device $S_{23}^T$ . As it can be seen, the coupling device S 3 and the coupling device S 4 are of different types and, therefore, cannot be coupled.

Consequently, the search for the coupling by type takes place by comparing said coupling device $S_{23}^R$ of the reference arrangement with the coupling device

$S_{25}^T$ of the target arrangement. Being of the same type, the two coupling devices are coupled, creating a new couple (23) of the matching iteration $M_1$. Since there are not more than one coupling device $S_{ij}^T$ of the same type in the target arrangement in series with each other, the absolute distance is not measured. Otherwise, the coupling criterion, in addition to the type, takes place on the basis of the minor absolute distance with respect to the X-axis, as mentioned above.

The first matching iteration $M_1$ proceeds until all the coupling devices $S_{ij}^R$ are matched by type (i.e., with respect to index i, in the convention at issue) with the coupling devices $S_{ij}^T$ of the target arrangement. The matching sequence of the first matching iteration $M_1$ (1,2), (2, 3), (3, 5), (4, 6) is obtained.

Therefore, as it can be seen, the different matching couples are created on the basis of a typology and an absolute distance test.

Subsequently, a second matching iteration $M_2$ is performed, this time starting from the second (in order of arrangement) coupling device $S_{22}^R$, than doing the same operations carried out for the first matching iteration $M_1$. The matching iteration $M_2$ shown in the figure as (2, 3), (3, 5), (4, 6) is obtained.

All the other matching iterations $M_k$, up to the last coupling device, i.e., until the index k associates every coupling devices of the target arrangement, are then determined. In the shown example, since five coupling devices $S_{ij}^R$ are arranged on the bar 11 in the reference arrangement, with j = 1...5, there are 5 matching iterations $M_1$, $M_2$, $M_3$, $M_4$, and $M_5$.

Subsequently, the matching iteration $M_j$ of those obtained having several couples is considered, which, in the example shown in the figure, is the first $M_1$ (see figure 2A), arranging (see figure 2B) the results in a two-column comparative matrix, such as the one shown in the figure, which compares in an operative way the arrangement of the coupling devices $S_{ij}^T$ of the target arrangement with the coupling devices $S_{ij}^R$ of the reference arrangement.

Said comparative matrix is obtained by arranging in a column (the one on the right in the example) the coupling devices ST of the target arrangement in the arrangement sequence according to the index j of the relative position between the coupling devices.

Subsequently, in the other column, the one on the left in the example, the coupling devices $S_{ij}^R$ of the reference arrangement are arranged, also ordered according to the respective second index j of the relative position between the coupling devices, however, in addition, respecting, for the rows of the same matrix, the matchings according to the first matching iteration $M_1$, i.e., as mentioned, the longest found.

In this way, the desired result of the algorithm is obtained, i.e., the indication of the minimum operations to be performed for the transition from the reference arrangement to the target arrangement of the coupling devices $S_{ij}$, comparing row by row the prearranged comparative matrix, always as shown in figure 2B. Still with reference to figures 1 and 2B, to the first coupling devices $S_{11}^T$ of the target arrangement, which is type "1", there is no coupling device $S_{ij}^R$ of the reference arrangement that corresponds, which, therefore, has to be added. In this case, the operator is instructed to add a coupling device $S_{11}^T$, i.e., in the first position (in sequence) of type "1".

This instruction can be provided by means of an interaction system, such as a display device 12, connected to a central control unit 13, which a work center (not shown in the figures) can be equipped with. Said display device 12 can be a monitor of a desktop computer used to give commands to the work center, or a display of a mobile device connected to the work center in a wireless mode, such as for example a tablet, a smartphone, a smartwatch.

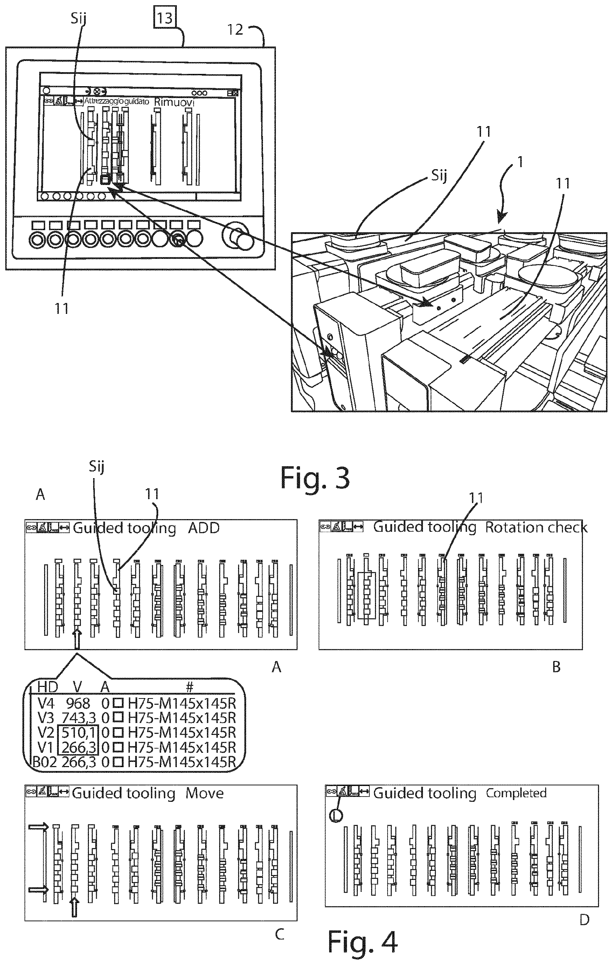

In particular, figure 3 shows schematically the correspondence between the bars 11 and the coupling devices $S_{ij}$ shown on the display device 12 and the real bar plane 1. To the second coupling device $S_{12}^T$ of the target arrangement, still of type "1", corresponds the coupling device $S_{11}^R$ of the reference arrangement, therefore, the same will have to be moved or handled possibly only in a specific position. In this case, only the position of the coupling device $S_{12}^T$, which is obviously already arranged on the respective bar 11, is communicated to the operator.

Still commenting on the example, it can be observed that the coupling device $S_{44}^T$ of the target arrangement does not have a similar device of "4" type in the reference arrangement, therefore it has to be added between the coupling devices $S_{23}^T$ and $S_{25}^T$ of the target arrangement. Furthermore, the coupling device $S_{15}^R$

of the reference arrangement of "5" type is not present, as a type of device, in the target arrangement, therefore it has to be removed.

Figure 4 shows four screenshots, indicated with A, B, C, and D of the display device 12, that show different instructions for the operator, corresponding to the instructions above. For example:

- in screenshot A the operator is instructed to add a coupling device $S_{ij}$ in a certain bar 11;
- in screenshot B the operator is instructed to check the rotation of a coupling device $S_{ij}$ in a certain bar 11;
- in screenshot C the operator is instructed to move a coupling device $S_{ij}$ in a certain bar 11; and
- in screenshot D the operator is informed that the arrangement of a certain bar 11 is completed.

As an alternative to viewing the instructions on the display device 12, the commands generated can, in case, be converted into instructions for automatic moving means of coupling devices $S_{ij}$, so as to automatically switch from said reference arrangement to said target arrangement.

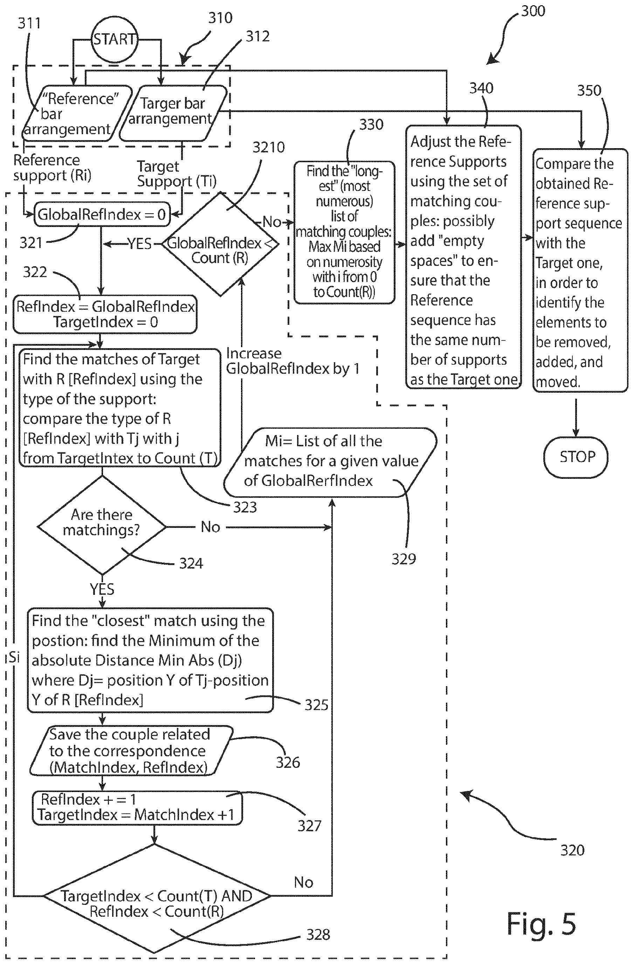

With reference now to figure 5, a flowchart is observed, showing an algorithm that realizes the method of positioning coupling devices according to the present invention, which can be implemented on the computer, and in general in a CPU or an FPGA, or on a general purpose type, that runs a suitable program.

The result of the algorithm, as seen above, is a sequential series of instructions for the operator or for an automatic moving system, such as those which have been described above, as an example, and shown on a display device 12. These instructions concerns moving, removing, and adding coupling devices $S_{ij}$ to switch from the reference configuration or arrangement to the target one. In addition to the instructions indicated, whose purpose is to automatically minimize the positioning operations from a reference position to a target position of the coupling devices on a bar 11 of a bar plane composed of a plurality of parallel bars 11, there is also the instruction of the possible rotation of the coupling devices $S_{ij}$, especially to allow for angular cuts.

Returning to figure 5, the method of positioning is indicated with the reference number 300 and includes the acquisition step 310 of the positioning data of the coupling devices $S_{ij}$ on a specific bar 11. In particular, in the sub-step 311 the data relating to the arrangement of the blocking devices $S_{ij}$ on a bar 11 before moving are acquired, while in the sub-step 312 the data relating to the target or desired arrangement of the blocking devices $S_{ij}$ on the same bar 11 are acquired.

In these acquisition steps 311 and 312 the indications of the supporting devices are also realized, both in the reference and in the target arrangement, by means of the integer variables Ti and Ri, which correspond to the second index $j$ of the matrices $S_{ij}^R$ and $S_{ij}^T$ mentioned above.

Subsequently there is the matching step 320, to each coupling device $S_{ij}^T$ of the final arrangement, of a respective coupling device $S_{ij}^R$ of the reference arrangement. This step 320 is realized by managing, in the step 321, a GlobalRefindex counter, which is a global index, as an external iterative cycle, which varies between 0 and the Count(Reference) index.

In step 322 the Refindex and Targetindex counters are initialized for each matching iteration that starts and proceeds sequentially from the set of coupling devices $S_{ij}$ of the reference arrangement. In particular, for such initialization 320, considering that GlobalRefindex is the index of the matching iterations $M_k$, Refindex is the index $j$ of relative position between the coupling devices $S_{ij}$ in the reference position and Targetindex is the index $j$ of relative position between the coupling devices $S_{ij}$ at the target position, it follows that Refindex=GlobarRefindex, and Targetindex=0.

In the steps/instructions 323, 324, 235, 326, 237, 238, 239, and 3210, by means of iterative cycles based on the count indexes Refindex, Targetindex, and GlobalRefindex, the association by type of the coupling devices is searched by scrolling the Refindex index by making a comparison between the coupling device $S_{ij}^R$ of the reference arrangement with a coupling device $S_{ij}^T$ of the target arrangement.

In particular, when one or more "Matches", i.e. couplings, are found, in step 325 a coupling device $S_{ij}^R$ of the reference arrangement with a coupling device $S_{ij}^T$ of the target arrangement that is closer in terms of relative position, i.e. absolute distance, is associated. The relative position between the coupling devices $S_{ij}$, is usually determined by the variable $D_j$.

Once every associations has been made, in step 330 the longest matching couples list, i.e. the matching iteration $M_k$ with multiple elements, is selected. This list will have a length equal to the count of the Count(Reference) index shown in the flowchart of figure 5.

In step 340 an association or adaptation of the supporting devices $S_{ij}^R$ in the reference arrangement is carried out on the basis of the associations of the longest matching couples list (i.e., as mentioned, the matching iteration $M_k$ with multiple elements/couples), adding empty spaces to obtain a sequence with the same number of elements as the target one.

Finally, in step 350 a comparison is made between the sequence of the coupling devices $S_{ij}^T$ of the target arrangement and the sequence of the coupling devices $S_{ij}^R$ of the reference arrangement, the latter readapted on the basis of the arrangement carried out in step 340, so as to generate the commands or indications for adding, removing, or inserting coupling devices $S_{ij}$.

In a work center (not shown in the figures) for machining pieces or panels made of wood, plastic, fiberglass, and the like, the central control unit 13 can perform the positioning method 300 described, and can have the means (CPU and the like) to execute, for example, the computer program which implements the algorithm shown in figure 4 and generates the commands on the display device 12 for the operator.

## Advantages

An advantage of the present invention is that of allowing a high speed in the variation of the arrangement of the coupling devices on each bar of a bar plane.

A further advantage of the present invention is that of allowing the operator to acquire the information for the variations of the arrangement of the coupling devices in the various bars of a bar plane in an intuitive way.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method of positioning (300) coupling devices ($S_{ij}$) on a bar (11) of a bar plane (2) of a work center, comprising, for each bar (11), the following steps:

   acquiring (311) an initial or reference arrangement of the coupling devices ( $S_{ij}^R$ ), characterizing each coupling device ( $S_{ij}^R$ ) with a type index ($i$), a position index ($j$) along the bar (11);
   acquiring (312) a final or target arrangement of the coupling devices ( $S_{ij}^T$ ), characterizing each coupling device ( $S_{ij}^T$ ) according to a type index ($i$), a position index ($j$) along the bar (11);
   following a sequential order according to the index or the position variable ($j$) of the coupling devices ( $S_{ij}^R$ ) of the reference arrangement, matching (320), by means of an iterative procedure, to each coupling device ( $S_{ij}^R$ ) of the reference arrangement, a respective coupling device ( $S_{ij}^T$ ) of the final arrangement,
wherein said coupling occurs if the coupling device ( $S_{ij}^R$ ) of the reference arrangement and the coupling device ( $S_{ij}^T$ ) of the final arrangement are of the same type, and
generating commands or indications (350) to pass, for each bar (11), from said reference arrangement of the coupling devices ( $S_{ij}^R$ ) to said target arrangement of the coupling devices ( $S_{ij}^T$ ) based on the associations of the previous matching (340) step.

2. Method (300) according to the preceding claim, **characterized in that** said matching (320) step takes place

   between a coupling device ( $S_{ij}^R$ ) of the reference arrangement and a coupling device ( $S_{ij}^T$ ) of the final arrangement having a minimum absolute distance between them,
   wherein said absolute distance between the coupling device ( $S_{ij}^R$ ) of the reference arrangement and the coupling device ( $S_{ij}^T$ ) of the final arrangement is determined with respect to the respective spatial position along the bar (11).

3. Method (300) according to the preceding claim, **characterized in that** the position along the bar (11) of each coupling device ($S_{ij}$) is measured with respect to a reference axis (X),

   wherein said reference axis (X) is arranged parallel to said bars (11), and
   wherein said absolute distance between a coupling device ( $S_{ij}^R$ ) of the reference arrangement and a coupling device ( $S_{ij}^T$ ) of the final arrangement is calculated as the difference between the respective measured positions with respect to said reference (X).

4. Method (300) according to any one of the preceding claims, **characterized in that** it comprises, after said matching (320) step, the following further steps:

obtaining a plurality of matching iterations ($M_k$), for each coupling device ($S_{ij}^R$) of the reference arrangement, wherein each matching iteration ($M_k$) comprises one or more matches; determining (330) the matching iteration ($M_k$) having multiple matches; and

associating (340) to each coupling device ($S_{ij}^T$) of the target arrangement, the respective coupling device ($S_{ij}^R$) of the reference arrangement, according to the combinations of the matching iteration ($M_k$) having several combinations, adding the empty positions in case there is no match.

5. Method (300) according to any one of the preceding claims, **characterized in that** said step of generating commands or indications (350) comprises the following sub-steps:

for each coupling device ($S_{ij}^T$) of the target arrangement coupled with a coupling device ($S_{ij}^R$) of the reference arrangement, generating a displacement command;

for each coupling device ($S_{ij}^T$) of the target arrangement not coupled with a coupling device ($S_{ij}^R$) of the reference arrangement, generating a command to add said coupling device ($S_{ij}^T$) of the target arrangement on the bar (11); and

for each coupling device ($S_{ij}^R$) of the reference arrangement not matched with a coupling device ($S_{ij}^T$) of the target arrangement, generating a command to remove said coupling device ($S_{ij}^R$) of the reference arrangement from the bar (11).

6. Method (300) according to any one of the preceding claims, **characterized in that** said command generating step comprises the sub-step of generating a command for the rotation of the coupling devices ($S_{ij}^T$) of the target arrangement.

7. Method (300) according to any one of the preceding claims, **characterized in that** it comprises the further step of displaying the commands generated in said command generating step (350) on a display device (12).

8. Method (300) according to any one of the preceding claims, **characterized in that** said coupling devices ($S_{ij}$) are suction cups or clamps.

9. Work center for machining pieces or panels made of wood, plastic, fiberglass and the like, comprising

a bar plane (2) consisting of a plurality of bars (11), wherein, on each bar (11), a plurality of coupling devices ($S_{ij}$) are movably slidingly arranged on each bar (11), for coupling a piece or panel to be machined, a display device (12), and a central control unit (13), operatively connected to said display device (12) and to said bars (11) for detecting the relative position of the coupling devices arranged on each bar (11), **characterized in that** said central control unit (13) is configured to carry out the steps of the positioning method (300) according to any one of claims 1-8, and to generate the commands for the arrangement of the coupling device ($S_{ij}^T$).

10. Work center according to the preceding claim, **characterized in that** said coupling devices ($S_{ij}$) are suction cups or clamps.

11. Work center according to any one of claims 9 or 10, **characterized in that** said bars (11) of said bar plane (1) are movable.

12. A computer program comprising instructions which, when the program is executed by a computer, cause the computer to execute the positioning method (300) according to any one of claims 1-8.

13. A computer readable storage medium comprising instructions which, when executed by a computer, cause the computer to execute the positioning method steps (300) according to any one of claims 1-8.

Fig. 1

1° MATCHING INTERACTION COUPLES:
M1 = (1, 2), (2, 3), (3, 5), (4, 6)
2° MATCHING INTERACTION COUPLES:
M2 = (2, 3), (3, 5), (4, 6)
3° MATCHING INTERACTION COUPLES:
M3 =  (3, 3), (4, 6)
4° MATCHING INTERACTION COUPLES:
M4 = (4, 6)
5° MATCHING INTERACTION

Fig. 2A

LONGEST MATCH: M1

R    T
#    S11 → ADD
S11  S12 → MOV
S22  S23 → MOV
#    S44 → ADD
S23  S25 → MOV
S24  S26 → MOV
S15  # → REMOVE S1

Fig. 2B

Fig. 3

| HD | V | A | | # |
|---|---|---|---|---|
| V4 | 968 | 0 | ☐ | H75-M145x145R |
| V3 | 743,3 | 0 | ☐ | H75-M145x145R |
| V2 | 510,1 | 0 | ☐ | H75-M145x145R |
| V1 | 266,3 | 0 | ☐ | H75-M145x145R |
| B02 | 266,3 | 0 | ☐ | H75-M145x145R |

Fig. 4

Fig. 5

Europäisches
Patentamt

European
Patent Office

Office européen
des brevets

# EUROPEAN SEARCH REPORT

Application Number

EP 23 17 0552

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 696 631 A1 (SCM GROUP SPA [IT]) 19 August 2020 (2020-08-19) * paragraph [0001] - paragraph [0020] * * paragraph [0025] - paragraph [0052] * * paragraph [0057] - paragraph [0072] * * figures 2-5 * | 1-13 | INV. G05B19/402 B23Q1/03 B23Q3/06 |
| X | EP 2 586 564 A1 (SCM GROUP SPA [IT]) 1 May 2013 (2013-05-01) * paragraph [0001] - paragraph [0015] * * paragraph [0020] - paragraph [0045] * * paragraph [0049] * * paragraph [0052] - paragraph [0053] * * figures 1-8 * | 1-13 | |
| A | US 6 764 434 B1 (VOLK WILHELM [US]) 20 July 2004 (2004-07-20) * column 3, lines 6-60 * * column 4, lines 44-63 * * figures 1-4 * | 1,8-13 | |
| A | EP 3 292 949 A1 (TRUMPF WERKZEUGMASCHINEN GMBH CO KG [DE]) 14 March 2018 (2018-03-14) * paragraph [0001] - paragraph [0015] * * paragraph [0025] - paragraph [0075] * * figures 1-5 * | 1,9,12, 13 | **TECHNICAL FIELDS SEARCHED (IPC)**<br><br>B23Q G05B |

The present search report has been drawn up for all claims

| Place of search | Date of completion of the search | Examiner |
|---|---|---|
| The Hague | 24 August 2023 | Orobitg Oriola, R |

EPO FORM 1503 03.82 (P04C01)

## ANNEX TO THE EUROPEAN SEARCH REPORT
## ON EUROPEAN PATENT APPLICATION NO.

EP 23 17 0552

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2023

| Patent document cited in search report | | Publication date | Patent family member(s) | | Publication date |
|---|---|---|---|---|---|
| EP 3696631 | A1 | 19-08-2020 | NONE | | |
| EP 2586564 | A1 | 01-05-2013 | NONE | | |
| US 6764434 | B1 | 20-07-2004 | AU | 2003234523 A1 | 02-12-2003 |
| | | | EP | 1536914 A1 | 08-06-2005 |
| | | | US | 6764434 B1 | 20-07-2004 |
| | | | WO | 03097296 A1 | 27-11-2003 |
| EP 3292949 | A1 | 14-03-2018 | DE | 102016215137 B3 | 16-11-2017 |
| | | | EP | 3292949 A1 | 14-03-2018 |

EPO FORM P0459

For more details about this annex : see Official Journal of the European Patent Office, No. 12/82